(19) **Europäisches Patentamt**
**European Patent Office**
**Office européen des brevets**

(11) **EP 1 161 435 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.⁷: **C07F 7/18**
// C07F15:00

(21) Anmeldenummer: **00912552.7**

(22) Anmeldetag: **06.03.2000**

(86) Internationale Anmeldenummer:
**PCT/EP00/01933**

(87) Internationale Veröffentlichungsnummer:
**WO 00/055163 (21.09.2000 Gazette 2000/38)**

(54) **VERFAHREN ZUR HERSTELLUNG EINES FORMOXYSILANS**

METHOD FOR PRODUCING FORMOXYSILANE

PROCEDE DE PREPARATION D'UN FORMOXYSILANE

(84) Benannte Vertragsstaaten:
**AT BE CH CY DE DK ES FI FR GB GR IE IT LI LU MC NL PT SE**

(30) Priorität: **15.03.1999 DE 19911616**

(43) Veröffentlichungstag der Anmeldung:
**12.12.2001 Patentblatt 2001/50**

(73) Patentinhaber: **Forschungszentrum Karlsruhe GmbH**
**76133 Karlsruhe (DE)**

(72) Erfinder:
- **DINJUS, Eckhard**
  **D-76774 Leimersheim (DE)**
- **PITTER, Stephan**
  **D-76297 Stutensee (DE)**
- **JANSEN, Achim**
  **D-07743 Jena (DE)**

(56) Entgegenhaltungen:
- **KOINUMA, H. ET AL.: "hydrosilylation of carbon dioxide catalysed by ruthenium complexes" JOURNAL OF THE CHEMICAL SOCIETY, CHEMICAL COMMUNICATIONS,1981, Seiten 213-214, XP002138253 in der Anmeldung erwähnt**
- **SÜSS-FINK, G. ET AL.: "anionische rutheniumcluster als katalysatoren bei der hydrosilylierung von kohlendioxid" JOURNAL OF ORGANOMETALLIC CHEMISTRY, Bd. 221, 1981, Seiten c36-c38, XP002138254 in der Anmeldung erwähnt**
- **JANSEN, A. ET AL.: "trans-(ru(II)Cl(MeCN)5)(RuCl4(MeCN)2): a reactive intermediate in the homogeneous catalyzed hydrosilylation of carbon dioxide" ORGANOMETALLICS, Bd. 19, Nr. 2, 24. Januar 2000 (2000-01-24), Seiten 135-138, XP002138255**

**Beschreibung**

Die Erfindung betrifft ein Verfahren zur Herstellung eines Formoxysilans gemäß dem Oberbegriff des Anspruchs 1 oder 2.

Acyloxysilane der allgemeinen Formel $R_nSi[O-C(O)R']_{4-n}$, wo R und R' einen organischen Rest oder Wasserstoff und n = 0, 1, 2 oder 3 darstellen, bilden eine Klasse von Verbindungen, die eine technisch wichtige Bedeutung besitzen. Die Silylester der Essigsäure (R' = $CH_3$-) werden in industriellem Maßstab für die Herstellung von vernetzten RTV *(room temperature vulcanisation)*-Siliconen eingesetzt. Die Vernetzung der Acyloxysilane wird durch die leichte Hydrolysierbarkeit der Silylestergruppe eingeleitet. In Dichtungsmaterialien, beispielsweise für Verfugungen im Sanitärbereich, genügt bereits die Luftfeuchtigkeit, um eine Vernetzung zu initiieren (Ullmann's Encyclopedia of Industrial Chemistry, 4th ed., Vol. 22, 77-80 und 119-120). Formoxysilane (R' = H) besitzen darüber hinaus ein Potential in der Herstellung definierter $SiO_2$-Schichten auf verschiedenen Substraten, die durch CVD *(chemical vapour deposition)* erreicht wird (EP 0778278 A)

Ein Verfahren der eingangs genannten Art geht aus der Veröffentlichung von H. Koinuma, F. Kawakami, H. Kato, H. Hirai, J. Chem. Soc. Chem. Comm., 1981, 213; und G. Süss-Fink; J. Reiner, J. Organomet. Chem., 221, 1981, C36 hervor.

Bei diesem Verfahren wird ein Silan in einem Lösungsmittel in Anwesenheit eines Homogenkatalysators mit Kohlendioxid hydrosilyliert:

$$RR'R''Si-H \quad + \quad O=C=O \quad \rightarrow \quad RR'R''Si-O-CHO$$

Als Homogenkatalysator dienen Komplexverbindungen des Palladiums und Rutheniums. Für die Bildung von Formoxysilanen aus der Umsetzung von Silanen des Typs RR'R''SiH (R, R', R'' = $CH_3$-, $C_2H_5$-, -$OCH_3$) werden bis zu 275 katalytische Zyklen pro Moläquivalent des Katalysators erzielt, wobei die Reaktionsbedingungen 60°C bis 120°C Reaktionstemperatur, 20 h bis 60 h Reaktionszeit sowie 30 bis 50 bar $CO_2$-Druck betragen. Eine Aufarbeitung und Wiederverwendung der Katalysatoren wird nicht erwähnt.

Die Hydrosylierung von Kohlendioxid bietet folgende Vorteile: Kohlendioxid ist nicht toxisch und daher ökologisch unbedenklich; es ist außerdem als $C_1$-Substrat konkurrenzlos preiswert. Ökonomische Vorteile können insbesondere dann erzielt werden, wenn ein kostengünstigerer Katalysator gefunden wird, der gegebenenfalls rezykliert werden kann.

Der Erfindung liegt daher die Aufgabe zugrunde, für das Verfahren der eingangs genannten Art einen einfacheren, leicht herstellbaren und damit preiswerteren Katalysator zu finden, der in großem Maßstab zugänglich ist und eine hohe Aktivität und Produktselektivität aufweist. Der Katalysator soll bei geeigneter Verfahrensführung rezyklierbar sein.

Die Aufgabe wird durch den im Kennzeichen der Ansprüche 1 oder 2 angegebenen Katalysator gelöst. In den weiteren Ansprüchen werden bevorzugte Ausgestaltungen des eingangs genannten Verfahrens angegeben.

Mit dem erfindungsgemäßen Verfahren lassen sich Formoxysilane der allgemeinen Formel $R_nSi[O-C(O)H]_{4-n}$ herstellen. R stellt einen organischen oder anorganischen Substituenten dar, vorzugsweise eine Alkyl-, Alkenyl-, Aryl-, Aryloxy-Gruppe oder einen Halogenid- oder $R^1R^2R^3SiO$-Rest, wobei $R^1$, $R^2$ und $R^3$ ein weiterer organischer oder anorganischer Substituent ist. Der Index n kann ganzzahlige Werte von 0 bis 3, vorzugsweise 2 oder 3, annehmen.

Erfindungsgemäß wird in einer ersten Ausführungsform als Katalysator Rutheniumtrichlorid ($RuCl_3 \cdot xH_2O$) eingesetzt. Bei dieser Ausführungsform wird ein Acyloxysilan in einem Lösungsmittel vorgelegt, der Katalysator zugegeben und Kohlendioxid aufgepreßt. Die Reaktionstemperatur sollte im Bereich von 20°C bis 120°C liegen. Als Kohlendioxid-Partialdruck eignen sich Drücke im Bereich von 1 bar bis 200 bar; die Reaktionszeit liegt zwischen 0,5 h und 50 h.

In einer zweiten Ausführungsform der Erfindung wird als Katalysator eine Verbindung des Übergangsmetalls eingesetzt, die durch Umsetzung eines Halogenids des Übergangsmetalls mit einem Nitril in Gegenwart des Silans der Formel $R_nSiH_{4-n}$ gebildet wird. Es handelt sich somit um einen präformierten Katalysator, der aus einem Silan und einem der oben genannten Katalysatoren, vorzugsweise Rutheniumtrichlorid, dargestellt wird. Die Präformierung wird vorzugsweise drucklos vorgenommen. Das Silan und der Katalysator, bevorzugt $RuCl_3 \cdot xH_2O$, können hierzu in einem Lösungsmittel, etwa in Acetonitril, gelöst und die Lösung unter Rückfluß erhitzt werden. Bei der Präformierung bildet sich eine katalytisch besonders wirksame Verbindung mit der Summenformel $C_{24}H_{36}Cl_6N_{12}Ru_3$.

Der präformierte Katalysator hat den Vorteil, daß die Temperatur der nachfolgenden Hydrosilylierung, die unter dem angegebenen Kohlenstoff-Partialdruck durchgeführt wird, wesentlich niedriger als bei der ersten Ausführungsform gewählt werden kann.

Bei der zweiten Ausführungsform kann somit eine Lösung des Silans in einem Lösungsmittel vorgelegt und mit dem Katalysator, insbesondere mit Rutheniumtrichlorid, bei der angegebenen Temperatur versetzt werden. Nachdem die Lösung unter Rückfluß erhitzt wurde, wird Kohlendioxid ohne weitere Nachreinigung aufgepreßt und der Reaktor unter Rühren des Reaktorinhalts auf eine Temperatur von 30°C bis 100°C erhitzt. Die Reaktionszeit liegt im allgemeinen zwischen 1 und 40 Stunden. Der Reaktor wird anschließend abgekühlt, ggf. entspannt und das Reaktionsprodukt durch Destillation, Rektifikation oder Extraktion isoliert.

Als Lösungsmittel eignen sich Nitrile, benzoide aromatische Verbindungen, Halogenkohlenwasserstoffe oder deren Mischungen. Für tiefsiedende Produkte werden bevorzugt höhersiedende Nitrile als Lösungsmittel verwendet; dies hat den Vorteil, daß die entstehenden Produkte direkt destillativ aus dem Reaktionsgemisch abgetrennt werden können und der Rückstand, der den Katalysator enthält, für weitere Umsetzungen genutzt werden kann.

Pro Äquivalent Si-H-Gruppen werden bevorzugt zwischen 1/10 und 1/5000 Äquivalenten des Katalysators, bezogen auf Äquivalente des aktiven Metalls, eingesetzt.

Die Ausbeuten an Produkten der Formel $R_nSi[O-C(O)H]_{4-n}$ hängen insbesondere von der Art des verwendeten Katalysators und den Substituenten R des Silans ab. Im günstigsten Fall werden nahezu quantitative Ausbeuten, bezogen auf das eingesetzte Silan, erhalten. Die TON (*turn over number*, Zahl der Umsetzungen pro Katalysatoratom) beträgt bis zu 5000 $mol_{Acyloxysilan}/mol_{aktives\ Metall}$ pro Ansatz bei einer TOF (*turn over frequency*, Zahl der Umsetzungen pro Stunde) bis zu 500 $h^{-1}$. Polyfunktionelle Produkte (n = 0, 1, 2) lassen sich, bedingt durch ihre leichte Hydrolysierbarkeit, als Vernetzungskomponenten für Siliconmaterialien einsetzen.

Die Erfindung wird im folgenden anhand von Ausführungsbeispielen näher erläutert.

Darstellung eines präformierten Katalysators

Eine Lösung von 1,09 g Dimethylphenylsilan und 1,98 g $RuCl_3 \cdot xH_2O$ (x berechnet sich aus dem analysierten Wassergehalt und hat für die in diesen Versuchen eingesetzte Charge den Wert 2.23) in 50 ml Acetonitril wird 4 h unter Rückfluß erhitzt. Die resultierende Suspension wird heiß filtriert und der erhaltene Feststoff zweimal mit je 6 ml Acetonitril, Diethylether und Pentan gewaschen. Nach dem Trocknen im Hochvakuum (24 h) erhält man 2,13 g (79 %) eines orangefarbenen Feststoffs mit der Summenformel $C_{24}H_{36}Cl_6N_{12}Ru_3$.

Hydrosylierung von Kohlendioxid

Allgemeine Arbeitsvorschrift (AAV) 1:

Nach Vorlegen des gemäß der obigen Vorschrift dargestellten, präformierten Katalysators in den Reaktorraum eines Autoklaven wird dieser verschlossen und sekuriert. Anschließend werden das Acetonitril und Silan zugesetzt sowie die erforderliche Menge an Kohlendioxid aufgepreßt. Nach erfolgter Reaktion gemäß den angegebenen Reaktionsbedingungen (Tabelle 2) wird der Autoklav über einen Blasenzähler entspannt, die Reaktionslösung entnommen und gegebenenfalls filtriert. Das Lösungsmittel wird im Vakuum (8 mbar) bei 30°C entfernt und das Produkt aus dem Rückstand durch Destillation gewonnen.

Allgemeine Arbeitsvorschrift (AAV) 2:

Nach Vorlegen des gemäß der obigen Vorschrift dargestellten, präformierten Katalysators in den Reaktorraum eines Autoklaven wird dieser verschlossen und sekuriert. Anschließend werden 3-Phenylpropionitril und Silan zugesetzt sowie die erforderliche Menge an Kohlendioxid aufgepreßt. Nach erfolgter Reaktion gemäß den angegebenen Reaktionsbedingungen (Tabelle 2) wird der Autoklav über einen Blasenzähler entspannt, die Reaktionslösung entnommen und gegebenenfalls filtriert. Das Produkt wird destillativ aus der Reaktionslösung gewonnen, wobei der Katalysator in dem schwererflüchtigen Lösungsmittel verbleibt.

In der Tabelle 1 sind die $^{29}$Si-NMR-Verschiebungen der Reaktionsprodukte (CDCl$_3$) angegeben. Die Versuchsbedingungen sind in der Tabelle 2 aufgeführt. In der Tabelle 2 sind Reaktionsparameter der Synthese von Formoxysilanen durch katalytische Hydrosilylierung von Kohlendioxid angegeben.

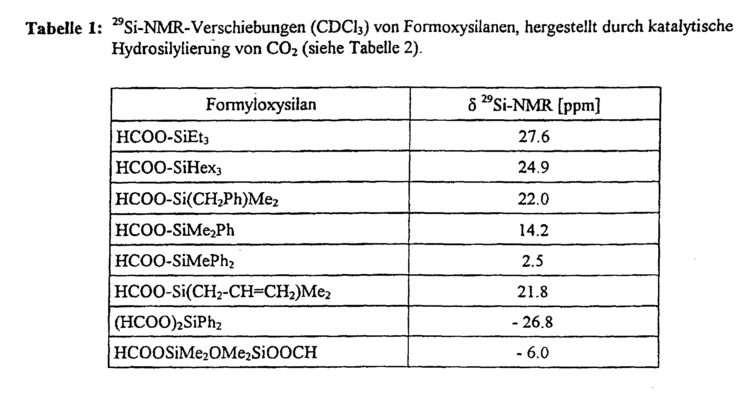

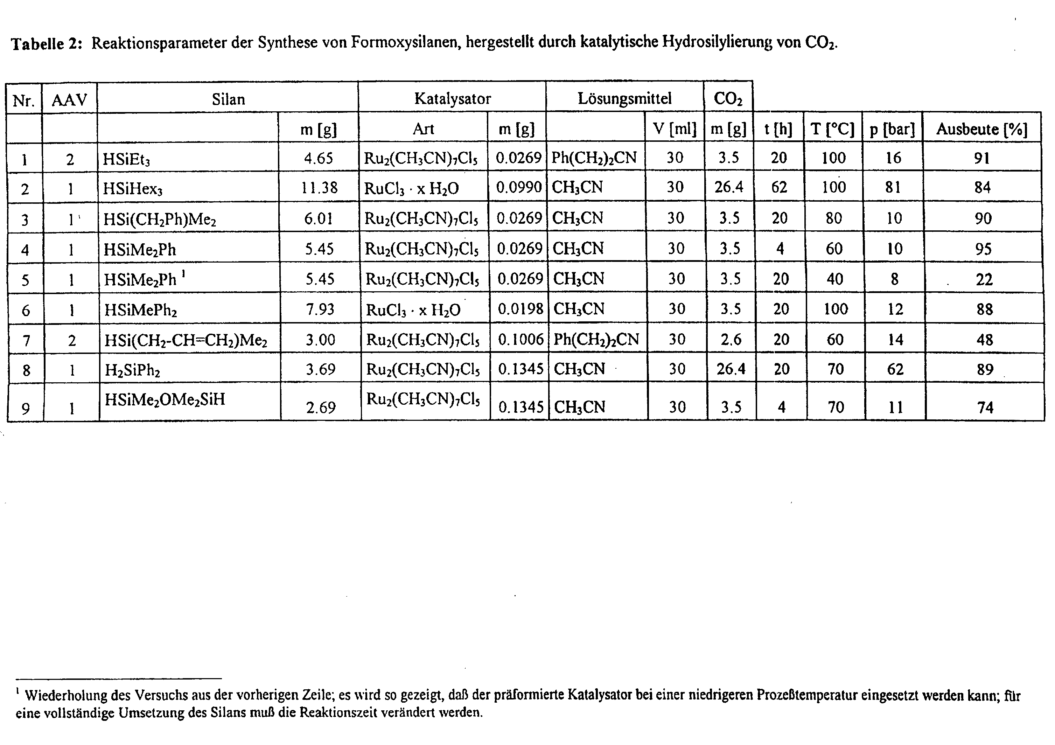

**Patentansprüche**

**1.** Verfahren zur Herstellung eines Formoxysilans, bei dem ein Silan der Formel $R_nSiH_{4-n}$, wobei R einen organischen oder anorganischen Substituenten und n = 0, 1, 2 oder 3 darstellt, in einem Lösungsmittel in Gegenwart eines Katalysators bestehend aus einer Ruthenium-Verbindung mit Kohlendioxid umgesetzt wird,
**dadurch gekennzeichnet, daß**
als Katalysator Rutheniumtrichlorid eingesetzt wird.

**2.** Verfahren zur Herstellung eines Formoxysilans, bei dem ein Silan der Formel $R_nSiH_{4-n}$, wobei R einen organischen oder anorganischen Substituenten und n = 0, 1, 2 oder 3 darstellt, in einem Lösungsmittel in Gegenwart eines Katalysators bestehend aus einer Verbindung eines Übergangsmetalls der Nebengruppe VIIIb des Periodischen Systems mit Kohlendioxid umgesetzt wird,
**dadurch gekennzeichnet, daß**
als Katalysator eine Verbindung des Übergangsmetalls eingesetzt wird, die durch Umsetzung eines Halogenids des Übergangsmetalls mit einem Nitril in Gegenwart des Silans der Formel $R_nSiH_{4-n}$ gebildet wird.

**3.** Verfahren nach einem der Ansprüche 1 oder 2,
**dadurch gekennzeichnet, daß**
pro Äquivalent der Si-H - Gruppe 1/10 bis 1/5000 Äquivalente des Katalysators, bezogen auf das Äquivalent des Übergangsmetalls, eingesetzt werden.

**4.** Verfahren nach einem der Ansprüche 1 oder 2,
**dadurch gekennzeichnet, daß**
als Lösungsmittel ein Nitril, ein benzoider Aromat und/oder ein Halogenkohlenwasserstoff eingesetzt wird.

**Claims**

**1.** Method of producing a formoxysilane, wherein a silane of the formula $R_nSiH_{4-n}$, R representing an organic or inorganic substituent and n being equal to 0, 1, 2 or 3, is reacted with carbon dioxide in a solvent in the presence of a catalyst comprising a ruthenium compound, **characterised in that** ruthenium trichloride is used as the catalyst.

**2.** Method of producing a formoxysilane, wherein a silane of the formula $R_nSiH_{4-n}$, R representing an organic or inorganic substituent and n being equal to 0, 1, 2 or 3, is reacted with carbon dioxide in a solvent in the presence of a catalyst comprising a compound of a transition metal of the subgroup group VIIIb of the Periodic System, **characterised in that** a compound of the transition metal is used as the catalyst, which compound is formed by reacting a halide of the transition metal with a nitrile in the presence of the silane of the formula $R_nSiH_{4-n}$.

**3.** Method according to one of claims 1 or 2, **characterised in that** 1/10 to 1/5000 equivalent of the catalyst, relative to the equivalent of the transition metal, are used per equivalent of the Si-H group.

**4.** Method according to one of claims 1 or 2, **characterised in that** a nitrile, a benzoid aromat and/or a halogen hydrocarbon is used as the solvent.

**Revendications**

**1.** Procédé de préparation d'un formyloxysilane dans lequel on fait réagir un silane de formule $R_nSiH_{4-n}$ dans laquelle R représente un substituant organique ou minéral et n = 0, 1, 2 ou 3, dans un solvant en présence d'un catalyseur constitué d'un composé de ruthénium, avec du dioxyde de carbone,
**caractérisé en ce que**
comme catalyseur on met en oeuvre du trichlorure de ruthénium.

**2.** Procédé de préparation d'un formyloxysilane dans lequel,
on fait réagir un silane de formule $R_nSiH_{4-n}$ dans laquelle R représente un substituant organique ou minéral et n = 0, 1, 2 ou 3, dans un solvant en présence d'un catalyseur formé d'un composé de métal de transition du sous groupe VIIIb du système périodique, avec le dioxyde de carbone,
**caractérisé en ce que**
comme catalyseur on met en oeuvre un composé de métal de transition qui est formé par mise en réaction d'un halogénure de métal de transition avec un nitrile, en présence du silane de formule $R_nSiH_{4-n}$.

**3.** Procédé selon l'une quelconque des revendications 1 ou 2,
**caractérisé en ce que**
par équivalent des groupes Si-H, on met en oeuvre 1/10 à 1/5000 équivalent de catalyseur, rapporté à l'équivalent de métal de transition.

4. Procédé selon l'une quelconque des revendications 1 ou 2,
   **caractérisé en ce que**
   comme solvant on met en oeuvre un nitrile, un aromatique benzénique et/ou un hydrocarbure halogéné.

**Tabelle 1:** $^{29}$Si-NMR-Verschiebungen (CDCl$_3$) von Formoxysilanen, hergestellt durch katalytische Hydrosilylierung von CO$_2$ (siehe Tabelle 2).

| Formyloxysilan | $\delta$ $^{29}$Si-NMR [ppm] |
|---|---|
| HCOO-SiEt$_3$ | 27.6 |
| HCOO-SiHex$_3$ | 24.9 |
| HCOO-Si(CH$_2$Ph)Me$_2$ | 22.0 |
| HCOO-SiMe$_2$Ph | 14.2 |
| HCOO-SiMePh$_2$ | 2.5 |
| HCOO-Si(CH$_2$-CH=CH$_2$)Me$_2$ | 21.8 |
| (HCOO)$_2$SiPh$_2$ | - 26.8 |
| HCOOSiMe$_2$OMe$_2$SiOOCH | - 6.0 |

**Tabelle 2:** Reaktionsparameter der Synthese von Formoxysilanen, hergestellt durch katalytische Hydrosilylierung von $CO_2$.

| Nr. | AAV | Silan | m [g] | Katalysator | | Lösungsmittel | | $CO_2$ | | | | | |
|---|---|---|---|---|---|---|---|---|---|---|---|---|---|
| | | | | Art | m [g] | | V [ml] | m [g] | t [h] | T [°C] | p [bar] | Ausbeute [%] | |
| 1 | 2 | $HSiEt_3$ | 4.65 | $Ru_2(CH_3CN)_7Cl_5$ | 0.0269 | $Ph(CH_2)_2CN$ | 30 | 3.5 | 20 | 100 | 16 | 91 | |
| 2 | 1 | $HSiHex_3$ | 11.38 | $RuCl_3 \cdot x\ H_2O$ | 0.0990 | $CH_3CN$ | 30 | 26.4 | 62 | 100 | 81 | 84 | |
| 3 | 1 | $HSi(CH_2Ph)Me_2$ | 6.01 | $Ru_2(CH_3CN)_7Cl_5$ | 0.0269 | $CH_3CN$ | 30 | 3.5 | 20 | 80 | 10 | 90 | |
| 4 | 1 | $HSiMe_2Ph$ | 5.45 | $Ru_2(CH_3CN)_7Cl_5$ | 0.0269 | $CH_3CN$ | 30 | 3.5 | 4 | 60 | 10 | 95 | |
| 5 | 1 | $HSiMe_2Ph$ [1] | 5.45 | $Ru_2(CH_3CN)_7Cl_5$ | 0.0269 | $CH_3CN$ | 30 | 3.5 | 20 | 40 | 8 | 22 | |
| 6 | 1 | $HSiMePh_2$ | 7.93 | $RuCl_3 \cdot x\ H_2O$ | 0.0198 | $CH_3CN$ | 30 | 3.5 | 20 | 100 | 12 | 88 | |
| 7 | 2 | $HSi(CH_2\text{-}CH=CH_2)Me_2$ | 3.00 | $Ru_2(CH_3CN)_7Cl_5$ | 0.1006 | $Ph(CH_2)_2CN$ | 30 | 2.6 | 20 | 60 | 14 | 48 | |
| 8 | 1 | $H_2SiPh_2$ | 3.69 | $Ru_2(CH_3CN)_7Cl_5$ | 0.1345 | $CH_3CN$ | 30 | 26.4 | 20 | 70 | 62 | 89 | |
| 9 | 1 | $HSiMe_2OMe_2SiH$ | 2.69 | $Ru_2(CH_3CN)_7Cl_5$ | 0.1345 | $CH_3CN$ | 30 | 3.5 | 4 | 70 | 11 | 74 | |

[1] Wiederholung des Versuchs aus der vorherigen Zeile; es wird so gezeigt, daß der präformierte Katalysator bei einer niedrigeren Prozeßtemperatur eingesetzt werden kann; für eine vollständige Umsetzung des Silans muß die Reaktionszeit verändert werden.